# EUROPÄISCHE PATENTSCHRIFT

(11) **EP 2 744 603 B1**
(45) Veröffentlichungstag und Bekanntmachung des Hinweises auf die Patenterteilung: **26.12.2018**
(21) Anmeldenummer: 12750582.4
(22) Anmeldetag: 15.08.2012
(51) Int. Cl.: B05C 17/01, B05C 17/005

(54) **AUSGABESYSTEM**
DISCHARGING SYSTEM
SYSTÈME DE DISTRIBUTION

(30) Priorität: 17.08.2011 DE 102011081137
(43) Veröffentlichungstag der Anmeldung: 25.06.2014
(73) Patentinhaber: Henkel AG & Co. KGaA, 40589 Düsseldorf (DE)
(72) Erfinder: SCHMID, Christoph, 82216 Maisach OT. Gernlinden (DE); DAUM, Thomas, 81369 München (DE)
(86) Internationale Anmeldenummer: PCT/EP2012/065964
(87) Internationale Veröffentlichungsnummer: WO 2013/024122

(56) Entgegenhaltungen:
- EP-A2- 0 236 129
- EP-A2- 1 516 679
- US-A- 5 423 752
- US-A1- 2003 080 152
- US-A1- 2006 079 765
- US-A1- 2009 250 491

## Beschreibung

Die Erfindung betrifft ein Ausgabesystem zum Ausgeben von flüssigen bis pastösen Massen aus Behältern. Derartige Systeme sind im Stand der Technik lange bekannt und finden insbesondere als Fluidabgabesysteme zur Ausgabe von Kleb- oder Dichtstoffen an Handarbeitsplätzen in Werkstätten, Labors und industriellen Einrichtungen ihren Einsatz.

Die US2009/250491A1 offenbart eine Vorrichtung zur Abgabe einer Aromakonzentrats in einem spezifischen Viskositätsbereich. Die US2006/079765A1 wiederum offenbart einen Triebkopf eines Kontrastmittelinjektionssytems. Weiter offenbart die US5243752A einen Mehrkomponentenspender mit wählbarem Mischungsverhältnis und austauschbaren Ampullen.

Die EP1087842B1 zeigt ein Fluidabgabesystem zur Ausgabe von Fluiden wie Epoxidharzen, Silikonen, Klebstoffen. Das Fluidabgabesystem umfasst eine Steuereinheit, die durch eine Steuerleine mit einem Handapplikator verbunden ist. Der Handapplikator ist mit einem Motor versehen, der in eine Antriebsstange eingreift. Die Antriebsstange wird in eine Baugruppe bestehend aus Kartusche und Kolben zum Applizieren des zu spendenden Fluids eingeführt. Die Antriebsstange ist so gestaltet, dass sie am Kolben in der konventionellen Kartuschen- und Kolbenbaugruppe über ein Schraubgewinde eingreift. Zudem ist eine Steuerungseinrichtung zur Steuerung des Vortriebs der Antriebsstange vorgesehen. Zur Ausgabe eine bestimmten Menge an Fluid wird die benötigte Zeit berechnet, die die Antriebsstange für eine bestimmte Vortriebsbewegung von einem Anfangspunkt benötigt. Um diese Menge auszugeben wird im Anschluss die Antriebsstange für diese Zeit bewegt. Dies kann jedoch zu Fehlern führen, da beispielsweise besagter Anfangspunkt falsch gesetzt wird, so dass es zu Ungenauigkeiten bei dem Volumen des ausgegebenen Fluids kommt.

Aufgabe der Erfindung ist es daher eine verbesserte Vorrichtung zur Ausgabe von flüssigen oder viskosen Materialien bereitzustellen. Andere Ausgabesysteme sind in den Dokumenten US2006/0079765, US5423752, US2003/0080182 und US5376079 offenbart.

Diese Aufgabe wird durch die Merkmale des Anspruchs 1 gelöst.

Vorteilhafte Ausgestaltungen der Erfindung sind mit den Unteransprüchen angegeben.

Grundgedanke der Erfindung ist der Einsatz eines Ausgabesystems zum Ausgeben von flüssigen bis pastösen mehrkomponentiger Massen oder auch Fluiden aus Hohlräumen von wenigstens zwei Behältern enthaltend die Komponenten, wobei das Ausgabesystem ein Abgabeende umfasst an dem die Komponenten ausgegeben werden; eine Aufnahmeeinheit für wenigstens zwei Behälter aufweisend die mit den auszugebenden Komponenten gefüllten Hohlräume; für jeden der Behälter jeweils eine Vortriebsstange mit einem an der dem Abgabeende zugewandten Seite der Vortriebsstange vorgesehenen Druckelement; für jeden der Behälter jeweils eine Vortriebseinrichtung zum Vortrieb der Vortriebsstange mit dem Druckelement in Richtung Abgabeende, wobei die Vortriebseinrichtungen zur entkoppelten Ausgabe der einzelnen Komponenten unabhängig voneinander betätigbar sind; für jeden der Behälter jeweils ein Mittel zum Bestimmen des Volumens der jeweils ausgegebenen Komponente, wobei jedes Mittel zum Bestimmen des Volumens der ausgegebenen Masse ein erstes Mittel zum Bestimmen der Querschnittsfläche des die Masse enthaltenen Hohlraumes sowie ein zweites Mittel zum Bestimmen des Vortriebsweges der Vortriebsstange, um eine Erfassung der Volumina der ausgegebenen Komponenten für eine Überwachung der Dosierrate und des Mischungsverhältnisses der Komponenten zu ermöglichen. Selbstverständlich kann alternativ auch beispielsweise ein Kombinationsbehälter, wie beispielsweise eine Doppelkartusche zum Einsatz sowie eine entsprechende Aufnahmemöglichkeit für diesen Kombinationsbehälter.

Ein wesentlicher Vorteil ist der Einsatz des Mittels zum Bestimmen des Volumens der ausgegebenen Masse. Durch den Einsatz eines solchen Mittels kann ein volumetrisches Dosieren der Masse ermöglicht werden, was die Applikation oder den Auftrag einer exakten Menge an Masse gewährleistet. Insbesondere haben Viskositätsunterschiede verschiedener Massen beispielsweise aufgrund Temperaturänderungen oder nach einem Gebindewechsel keinen oder höchstens einen geringen Einfluss auf die Ausgabemenge, da volumetrisch dosiert werden kann. Durch Nutzung eines geeigneten Anzeigemittels, wie eines Displays oder einer Skala, kann zudem die dosierte Menge an ausgegebener Masse exakt kontrolliert werden. Besagtes Mittel ist dabei vorzugsweise derart gestaltet, dass es keines Kontaktes zur auszugebenden Masse bedarf, insbesondere um eine Verschmutzung des Mittels durch die Masse zu vermeiden und eine lange Funktionsfähigkeit zu gewährleisten. Demnach ist ein weiterer Vorteil die Gestaltung des Mittels zum Erfassen des Volumens derart, dass selbiges ohne Berührung oder Kontaktierung der Masse eine Bestimmung des Volumens der ausgegebenen Masse ermöglicht.

Das Ausgabesystem kann dabei als handführbares und/oder tragbares System ausgestaltet sein. Dergleiche Systeme sind im Stand der Technik hinlänglich, beispielsweise als Kartuschen- oder Schlauchbeutelpistolen bekannt. Bevorzugt ist das System jedoch als Fluidabgabesystem zur exakten Ausgabe von Kleb- oder Dichtstoffen, insbesondere von Epoxidharzen, Silikonen, Klebstoffen, insbesondere anaeroben, UV-aushärtenden und Gel-Cyanacrylat-Klebstoffen sowie Chip-Bonder und Lötpasten ausgestaltet. Zur Anwendung kommt das Ausgabesystem bevorzugt für einen automatisierten Auftrag der Masse, insbesondere mit Hilfe eines Industrieroboters zum Einsatz. Andere Einsatzgebiete finden sich insbesondere an Handarbeitsplätzen in Werkstätten, Labors und industriellen Einrichtungen. Die Dosierrate eines erfindungsgemäßen Ausgabesystems liegt vorzugsweise im Bereich von 0,02 ml/min bis 1 ml/min, bevorzugt in einem Bereich von 0,04 ml/min bis 0,5 ml/min. Eine besonders bevorzugte Dosierrate liegt bei etwa 0,05 ml/min. Die Dosiermenge je Teil liegt dabei im bevorzugten Bereich von 0,02g bis 0,1g, besonders bevorzugt bei 0,05g. Vorzugsweise ist das Ausgabesystem derart gestaltet, dass Behälter mit einem Fassungsvermögen im Bereich von 10ml bis 1000ml verwendet werden können, besonders bevorzugt im Bereich von 200ml bis 800ml.

Die zur Anwendung kommenden Behälter weisen wie Eingangs gesagt einen Hohlraum auf, in dem sich die auszugebende Masse befindet. Bevorzugt sind die Behälter derart gestaltet, dass die Querschnittsfläche des Hohlraumes in Längserstreckung des Behälters konstant ist. Besonders bevorzugt sind dabei die Form und die Abmessungen des Querschnitts des Hohlraumes in Längserstreckung konstant. Dabei sind insbesondere hohlzylindrische Behälter mit einem konstanten Durchmesser, insbesondere Innendurchmesser denkbar. Als Behälter für die auszugebende Masse können beispielsweise im Stand der Technik bekannte Kartuschen zum Einsatz kommen. Eine sich eignende Kartusche weist beispielsweise eine feste äußere Hülle, insbesondere mit einem runden, rechteckigen oder vieleckigen Querschnitt auf, die besagten Hohlraum zur Aufnahme der auszugebenden Masse umschließt. Bevorzugt kommt dabei ein hohlzylindrischer Behälter zum Einsatz. An der distalen Seite kann die Kartusche dabei eine Düsenform mit einer Ausgabeöffnung aufweisen. An der proximalen Seite ist besagter Hohlraum meist von einem Kolben verschlossen, welcher dicht mit der Innenwand der Hülle abschließt und zur Ausgabe der Masse innerhalb des Hohlraums verschiebbar ist. Die Aufnahmeeinheit kann in diesem Fall derart gestaltet sein, dass nur Behälter mit bestimmten äußeren Abmessungen aufgenommen werden können. Jedoch sind auch Bauweisen denkbar, bei denen Behälter beliebiger Form und Abmessung aufgenommen werden können.

Selbstverständlich können auch flexible Behälter, insbesondere Folienkartuschen oder Schlauchbeutel, zum Einsatz kommen, wobei in diesem Fall eine besondere Gestaltung der Aufnahmeeinheit von Vorteil ist. Beispielsweise kann sich der Einsatz einer im Wesentlichen geschlossenen oder einer nach dem Einlegen eines genannten flexiblen Behälters schließbaren Aufnahmeeinheit als sinnvoll erweisen, die vorzugsweise lediglich an dem Abgabeende eine Abgabeöffnung zur Ausgabe der Masse aufweist. Derartige Folienkartuschen oder Schlauchbeutel können eine dünnwandige Hülle aufweisen, die insbesondere aus einer Folie oder einem Folienverbund bestehen Kann. Selbige Hülle umschließt besagten Hohlraum, in dem die Masse enthalten ist. An den beiden Enden können die Hüllen wurstzipfelartig verschlossen sein. Zur Nutzung eines derartigen Behälters muss dieser an einem Ende insbesondere durch Aufstechen oder Aufschneiden geöffnet werden.

Zur Ausgabe der Masse aus dem Behälter ist die Vortriebsstange mit einem Druckelement vorgesehen, wobei letzteres an der dem Abgabeende zugewandten Seite der Vortriebsstange vorgesehenen ist. Die Vortriebsstange ist vorzugsweise als druckbelastbare Stange mit beliebigem Querschnitt, insbesondere mit rundem, viereckigem oder rechteckigem Querschnitt ausgestaltet. Zudem kann die Vortriebsstange massiv oder hohl sein. Ferner ist eine Ausrüstung der Vortriebsstange mit Vortriebsmitteln denkbar, wozu insbesondere der Einsatz von einer Verzahnung auf der gesamten oder auf Teilen der Oberfläche der Vortriebsstange zählt. In einer Ausgestaltung der Erfindung ist zudem vorgesehen, dass die Vortriebsstange als Spindel ausgestaltet ist, um einen Vortrieb über eine entsprechende Vortriebseinrichtung zu ermöglichen. Besagtes Druckelement der Vortriebsstange kann bevorzugt ein Kolben sein, der fest mit der Vortriebsstange verbunden ist. Alternativ kann das Druckelement auch durch den distalen Endbereich, also durch den dem Abgabeende zugewandten Bereich der Vortriebsstange bereitgestellt werden.

Eine sich eignende Vortriebseinrichtung zum Vortrieb der Vortriebsstange kann insbesondere ein Linearmotor, ein Schrittmotor oder eine andere dem Fachmann bekannte, insbesondere elektrisch, pneumatisch oder hydraulisch betriebene Vortriebseinrichtung sein. Zudem sind auch rein mechanisch betätigbare Vortriebseinrichtungen denkbar, wie sie beispielsweise für handelsübliche Kartuschenpistolen zum Einsatz kommen.

Als besonderer Vorteil der Erfindung hat sich der Einsatz einer Aufnahmemöglichkeit für zumindest zwei Behälter erwiesen, insbesondere bestehend aus zwei oder mehreren Aufnahmeeinheiten für wenigstens zwei Behälter, um eine gleichzeitige Ausgabe mehrerer Massen, insbesondere mehrkomponentiger Massen zu ermöglichen, wobei zur Ausgabe der Massen für jeden Behälter jeweils eine Vortriebseinheit und jeweils eine Vortriebsstange vorgesehen ist, sowie jeweils ein Mittel zum Bestimmen des Volumens jeder ausgegebenen Masse. Bevorzugt sind die Vortriebseinheiten und/oder Vortriebsstangen entkoppelt, das heißt unabhängig voneinander bewegbar, so dass aus jedem Behälter unabhängig von einem weiteren oder den weiteren Behältern Masse ausgegeben werden kann. Die Ausgabe der Masse aus jedem Behälter wird dabei durch jeweils ein Mittel zum Bestimmen des Volumens bestimmt. Jedes dieser Mittel ist dabei vorzugsweise derart gestaltet, dass das Volumen ohne Berührung oder Kontaktierung der Masse durch das Mittel bestimmt werden kann. Insbesondere können besagte Mittel die oben beschriebenen ersten und zweiten Mittel umfassen und wie beschrieben gestaltet sein. Durch eine derartige Gestaltung eines Ausgabesystems kann ein volumetrisches Dosieren mehrerer, insbesondere mehrkomponentiger Massen aus mehreren Behältern, insbesondere aus handelsüblichen Doppelkartuschen bereitgestellt werden. Durch die Bereitstellung eines Mittels, welches eine Bestimmung des Volumens ohne Massenkontakt oder -berührung ermöglicht, kann ein genaues Erfassen des ausgegebenen Volumens ohne Kontakt zur Masse bereitgestellt werden, was beispielsweise etwaige Messvorrichtungen des Mittels verschmutzen könnte. Bei dem Einsatz eines oberhalb beschriebenen Mittels, insbesondere durch Einsatz von besagten ersten und zweiten Mitteln sind keine mechanisch bewegten Teile in der Masse oder mit Massenkontakt nötig, wie etwa Spindeln, Kolben oder Zahnräder, wie bei handelsüblichen und herkömmlichen Durchflussmesssystemen. Durch besagte Entkopplung kann zudem insbesondere bei mehrkomponentigen Massen eine unabhängige Überwachung der Dosierrate und des Mischungsverhältnisses der Komponenten ermöglicht werden. Insbesondere Dosierabweichungen oder Abweichungen im Mischungsverhältnis, beispielsweise resultierend aus verstopften Leitungen oder Mischern, Leckagen oder Verschleiß, können umgehend erkannt werden.

Bei dieser erfindungsgemäßen Nutzung des Ausgabesystems zur Ausgabe von zwei oder mehr Massen hat es sich zudem als vorteilhaft erwiesen, wenn das Abgabesystem ein Dosiersystem für die auszugebenden Massen aufweist, welches an dem Abgabeende des Ausgabesystems vorgesehen ist oder als zusätzliche Einheit an das Abgabeende angeschlossen ist. Ein derartiges Dosiersysteme kann insbesondere bei zweikomponentigen Massen ein Doppel-Kolbenpumpendosierer, ein Doppel-Schneckenpumpendosierer oder jeder andere volumetrische Zweikomponentendosierer sein.

Erfindungsgemäß ist besagtes Mittel zum Bestimmen des Volumens der ausgegebenen Masse derart gestaltet, dass ein erstes Mittel zum Bestimmen der Querschnittsfläche des die Masse enthaltenen Hohlraumes umfasst sowie ein zweites Mittel zum Bestimmen des Vortriebsweges der Vortriebsstange, um eine Bestimmung des Volumens der ausgegebenen Masse zu ermöglichen. Aus den erfassten Werten ist das Volumen der ausgegebenen Masse auf einfache Weise zu ermitteln, um eine exakte Dosierung der Masse zu gewährleisten. Beispielsweise ist hier als weitere Hilfsmittel zum direkten Erfassen des Volumens für den Anwender der Einsatz einer Skala für die Volumenanzeige und einer Ablesemarke denkbar, wobei eines der genannten Hilfsmittel mit der Vortriebsstange in Verbindung steht und wobei insbesondere die Skala händisch mit dem durch das Mittel zum Bestimmen der Querschnittsfläche erfassten oder ermittelten Querschnittsfläche des Hohlraumes justiert wird. Die Verbindung der Skala oder der Ablesemarke mit der Vortriebsstange ist dabei vorzugsweise derart gestaltet, dass bei einem Vortrieb der Vortriebsstange, einhergehend mit einer Massenausgabe, eine Verschiebung der Ablesemarke relativ zur Skala erfolgt. So kann der Anwender das ausgegebene Volumen direkt mittels der Ablesemarke an der Skala ablesen. Alternativ können die Mittel zum Erfassen von Querschnittsfläche und Vortriebsweg oder zumindest eines der genannten Mittel elektrische Messeinrichtungen aufweisen, die mit einer Kontrolleinrichtung verbunden sein können, über die bei einem Vortrieb der Vortriebsstange das auszugebende Volumen direkt angezeigt wird. Insbesondere das besagte erste Mittel kann dabei als aktives oder als passives Mittel ausgestaltet sein. Unter einem passiven Mittel ist dabei ein solches Mittel zu verstehen, welches die Querschnittsfläche nicht aktiv vermisst, was jedoch beispielsweise derart gestaltet ist, dass nur Behälter aufweisend Hohlräume mit bestimmten und insbesondere vorher definierten Hohlräumen zur Anwendung kommen können. Im Gegensatz dazu beinhaltet das aktive Mittel vorzugsweise Vorrichtungen zum aktiven Erfassen, insbesondere zum Messen der Querschnittsfläche des Hohlraumes. Letztgenannte Mittel eignen sich insbesondere für Ausgabesysteme, welche mit Behältern unterschiedlicher Größe flexibel verwendet werden können.

In einer Ausgestaltung der Erfindung ist zudem vorgesehen, dass das Druckelement der Vortriebsstange das erste Mittel, in diesem Fall also als passives Mittel, zum Erfassen der Querschnittsfläche des die Masse enthaltenen Hohlraumes bereitstellt, wobei das Druckelement kolbenförmig gestaltet ist, um die Querschnittsfläche eines in die Aufnahmeeinheit einzulegenden bevorzugten Behälters zu definieren.

Eine derartige Gestaltung des ersten Mittels kommt insbesondere bei der Verwendung von oberhalb beschriebenen Kartuschen als Behälter zum Einsatz. Das Druckelement weist dabei eine derartige Größe auf, dass lediglich Kartuschen aufweisend einen Hohlraum mit einer bestimmten Querschnittsfläche zum Einsatz kommen können. Denkbar ist beispielsweise eine derartige Lösung, bei denen zum einen Kartuschen mit Hohlräumen mit einer zu kleinen Querschnittsfläche nicht verwendet werden können, da das Druckelement einen größeren Durchmesser aufweist und daher nicht in den Hohlraum zur Massenausgabe eingebracht werden kann. Zum zweiten kann das Druckelement insbesondere an den oberhalb beschriebenen innerhalb des Hohlraumes angeordneten Kolben angepasst sein, so dass eine Massenausgabe aus Kartuschen mit Hohlräumen mit zu großen Querschnittsflächen auch nicht problemlos Anwendung finden. In einer vorteilhaften Weiterbildung kann das erste Mittel einerseits durch das Druckelement, insbesondere zur Unterbindung der Ausgabe von Masse aus Behältern aufweisend Hohlräume mit zu kleinen Querschnittsflächen, bereitgestellt werden. Zum anderen kann zusätzlich die Aufnahmeeinheit derart gestaltet sein, dass Behälter aufweisend Hohlräume mit zu großen Querschnittsflächen nicht in selbige Aufnahmeeinheit passen oder nicht sicher aufgenommen werden können. Hierbei läge ein oben beschriebenes passives Mittel beinhaltend das Druckelement und die Aufnahmeeinheit vor. Insbesondere kann auf diese Weise gewährleistet werden, dass eine Massenausgabe nur aus Behältern aufweisend Hohlräume mit definierten und vorbestimmten Querschnittsflächen möglich ist. Bei der Verwendung von oben beschrieben flexiblen Behältern ist eine genannte Lösung analog möglich, insbesondere durch geeignete Ausgestaltung der Aufnahmeeinheit, beispielsweise als fester Hohlzylinder, in den der flexible Behälter eingelegt wird sowie eines Druckelementes innerhalb der Aufnahmeeinheit.

Alternativ oder zusätzlich hat es sich als vorteilhaft herausgestellt, dass die Aufnahmeeinheit das erste Mittel, auch hier wieder ein beschriebenes passives Mittel zum Erfassen der Querschnittsfläche des Hohlraums bereitstellt, wobei die Aufnahmeeinheit eine derartige Gestaltung aufweist, dass nur Behälter einer bevorzugten Querschnittsfläche aufnehmbar und/oder eine Ausgabe der Masse nur mit Behältern einer bevorzugten Querschnittsfläche möglich ist. Hier sind Lösungen denkbar, bei denen lediglich für Behälter, wie beispielsweise Kartuschen eine sichere Aufnahme und/oder Fixierung gewährleistet wird, deren Hohlraum eine vorbestimmte und/oder definierte Querschnittsfläche aufweist. Denkbar ist insbesondere derartige Gestaltung der Aufnahmeeinheit, bei der der Behälter zwischen zwei gegenüberliegenden, seitlich an die Behälterseiten angreifenden Klemmbacken eingespannt oder eingeschnappt wird. So können Behälter aufweisend Hohlräume mit zu großen Querschnittsflächen beispielsweise aufgrund ihrer Abmessung nicht aufgenommen werden. In diesem Fall könnten zwar Behälter aufweisend Hohlräume mit zu kleinen Querschnittsflächen eingelegt werden, würde jedoch aufgrund der zu kleinen Querschnittsfläche durch den Freiraum zwischen den gegenüberliegenden Klemmbacken hindurchfallen. Analog ist eine derartige Lösung auch für flexible Behälter mit entsprechenden Aufnahmeeinheiten möglich. In diesem Fall, beispielsweise bei der Verwendung einer hohlzylindrischen Aufnahmeeinheit und einem beschriebenen Schlauchbeutel als Behälter, passen Behälter aufweisend einen Hohlraum mit einer zu großen Querschnittsfläche nicht in die Aufnahmeeinheit, Behälter aufweisend einen Hohlraum mit einer zu kleinen Querschnittsfläche werden durch das Druckelement derart zusammengepresst, dass eine Massenausgabe erst ab einer vollständigen Ausfüllung des Hohlraumes der Aufnahmeeinheit möglich ist.

Besonders vorteilhaft hat sich jedoch die Verwendung eines ersten Mittels herausgestellt, welches aus der Kombination aus Aufnahmeeinheit und Druckelement gebildet wird. Derartige erste Mittel lassen wie oberhalb beschrieben als passives Mittel vorzugsweise keine Bestimmung im Sinne einer Messung der Querschnittsfläche zu, ermöglichen jedoch eine Bestimmung der Querschnittsfläche im Sinne einer Definition, so dass nicht vorgesehene Querschnittsflächen nicht zur Anwendung kommen können.

Alternativ zu den genannten passiven Mitteln kann sich auch der Einsatz eines aktiven Mittels zum Erfassen der Querschnittsfläche des Hohlraumes als sinnvoll erweisen. Hierbei sind insbesondere berührungslose Messvorrichtungen, wie beispielsweise Ultraschallentfernungsmessvorrichtungen denkbar, die die Querschnittsfläche erfassen oder zumindest Messwerte erfassen, aus denen sich die Querschnittsfläche insbesondere mit Hilfe einer Kontrolleinrichtung errechnen lässt. Zudem sind auch andere Messvorrichtungen denkbar, insbesondere an der Vortriebsstange angebrachte Schwenkvorrichtungen, die sich an die Innenwand eines Behälters nach dem Einbringen der Kolbenstange anschmiegen, was zu einer Winkeländerung zwischen Vortriebsstange und Schwenkvorrichtung führen kann, aus der wiederum die Querschnittsfläche berechenbar ist. Zudem ist auch der Einsatz weiterer dem Fachmann bekannter Messvorrichtungen zum aktiven Erfassen der Querschnittsfläche des Hohlraums denkbar.

Ein weiterer Vorteil ist die Verwendung eines zweiten Mittels zum Bestimmen des Vortriebsweges der Vortriebsstange, welches ein Wegmesssystem umfasst, um den Vortriebsweg der Vortriebsstange zu bestimmen. Derartige Wegmesssysteme sind Messsysteme, die die Länge einer durchlaufenen Strecke messen. Wegmesssysteme sind im Stand der Technik allgemein bekannt, insbesondere sind derartige Wegmesssysteme in der Fabrik- oder Prozessautomation zur Unterstützung bei kontaktbehafteten oder berührungslosen Mess- oder Positionieraufgaben im Einsatz. Eine einfache Ausführung eines derartigen Wegmesssystems wäre eine Anzeige des Vortriebsweges mittels Skala und Ablesemarke. Wie oberhalb beschrieben könnte selbige für Behälter aufweisend definierte Querschnittsflächen an selbige angepasst sein, so dass beispielsweise über die Skala nicht nur Vortriebsweg, sondern auch das aus dem erfassten Vortriebsweg und der definierten Querschnittsfläche ermittelte Volumen der ausgegebenen Masse angezeigt wird. Eine weitere Möglichkeit wäre die Bereitstellung eines derartigen manuellen Wegmesssystems aufweisend eine Skala zur Vortriebswegsanzeige und/oder zur Volumenanzeige, wobei die Skala für letztgenannte Anzeige idealerweise an verschiedene Querschnittsflächen anpassbar ist.

Selbstverständlich ist auch der Einsatz komplexerer und insbesondere elektrisch betriebener Wegmesssysteme denkbar. Insbesondere kann ein zum Einsatz kommendes Wegmesssystem eine analoge oder eine digitale Messwerterfassung, also Erfassung des Vortriebsweges aufweisen, wobei analoge Wegmesssysteme ein stetiges Signal liefern, digitale Wegmesssysteme ein stufenweise wechselndes Signal. Zudem sind insbesondere induktive Wegmesssysteme oder alternativ auch magnetostriktive Wegmesssysteme einsetzbar. Die bevorzugte Auflösung eines zum Einsatz kommenden Wegmesssystems liegt im Bereich von 0,005mm bis 0,1mm, besonders bevorzugt bei 0,01mm. Insbesondere mit einem derartigen Wegmesssystem kann ein besonders exaktes Dosieren der Masse ermöglicht werden.

Ein weiterer Vorteil ist der Einsatz einer Messstange als Teil des zweiten Mittels zum Bestimmen des Vortriebsweges der Vortriebsstange, wobei ein Vortrieb der Vortriebsstange zu einer Bewegung der Messstange führt. Beispielsweise kann die Messstange derart mit der Vortriebsstange verbunden sein, dass eine Bewegung der Vortriebsstange in einer Bewegung der Messstange resultiert. Alternativ kann die Messstange auch als Teil der Vortriebsstange ausgebildet sein. Durch den Einsatz einer Messstange, welche sich mit der Vortriebsstange bewegt, kann eine Erfassung des Vortriebswegs der Vortriebsstange ermöglicht werden, ohne dass das zweite Mittel in Kontakt zu der auszugebenden Masse steht.

Zudem hat sich ferner eine parallele Anordnung der Messstange zur Vortriebsstange als vorteilhaft herausgestellt. Dabei ist die Messstange vorzugsweise über ein jochförmiges Verbindungselement mit der Vortriebsstange verbunden, um eine Bewegung der Messstange bei einem Vortrieb der Vortriebsstange zu gewährleisten. Durch einen derartigen Aufbau kann ein Ausgabesystem mit geringen Abmessungen bereitgestellt werden, da Messstange und Vortriebsstange parallel zueinander angeordnet sind.

Ein weiterer Vorteil ist der Einsatz eines Mittels zum Erfassen der über die Vortriebsstange auf das Druckelement wirkenden Kraft zur Ausgabe der Masse. In einem besonders bevorzugten Fall kommt als Mittel ein Kraftsensor zum Einsatz. Beispielsweise ist es denkbar, dass die Vortriebsstange hohl gestaltet ist, wobei in dem Hohlraum eine Taststange zum Erfassen der auf das Druckelement wirkenden Kraft vorgesehen ist. Bevorzugt erfolgt die Kraftübertragung auf das Druckelement dabei ausschließlich über die Taststange. Es kann jedoch zusätzlich vorgesehen werden, dass die Kraftübertragung auch über die Vortriebsstange selbst erfolgt. Die Taststange kann dabei mit dem Kraftsensor derart wirkend verbunden sein, dass eine Erfassung der auf das Druckelement wirkenden Kraft durch den Kraftsensor ermöglicht werden kann. Vorzugsweise ist dabei der Kraftsensor fest mit der Vortriebsstange verbunden oder zumindest in Verschieberichtung der Vortriebsstange hinsichtlich letztgenannter fixiert, beispielsweise an der hinsichtlich des Druckelementes gegenüberliegenden Seite der Vortriebsstange, und bewegt sich bei einer Verschiebung der Vortriebsstange mit selbiger mit. Zur Verbindung kann zusätzlich eine Sensorhalterung vorgesehen werden, welche fest mit der Vortriebsstange verbunden ist.

Mit einem derartigen oder einem ähnlichen Mittel zum Erfassen der auf das Druckelement wirkenden Kraft kann eine Möglichkeit zum Erfassen und Messen von Daten bereitgestellt werden, welche mit der Masse in dem Behälter oder mit dem Behälter selbst in Verbindung oder Beziehung gebracht werden können. Insbesondere können so Verstopfungen und ähnliche Störungen an Ausgabeöffnungen, Mischer oder Düsen schnell erkannt werden.

Ein weiterer Vorteil ist der Einsatz eines Ausgabesystem, wobei das Mittel zum Bestimmen des Volumens der ausgegebenen Masse zum einen besagtes zweite Mittel zum Bestimmen des Vortriebsweges der Vortriebsstange aufweisend ein Messsystem zum Bestimmen des Vortriebsweges, insbesondere ein beschriebenes Wegmesssystem umfasst. Zum anderen umfasst das Mittel zum Bestimmen des Volumens eine Kontrolleinheit mit der das Messsystem verbunden, insbesondere elektrisch verbunden ist, wobei das Messsystem eine Eingabemöglichkeit der Querschnittsfläche eines verwendeten Behälters umfasst, um das Volumen der ausgegebenen Masse zu berechnen.

Ein weiterer Vorteil ist der Einsatz eines Dosiersystems für die auszugebenden Massen, welches an dem Abgabeende des Ausgabesystems vorgesehen ist oder als zusätzliche Einheit an das Abgabeende angeschlossen ist

Es hat sich ferner als vorteilhaft herausgestellt, ein Mittels zum Erfassen der über die Vortriebsstange auf das Druckelement wirkenden Kraft zur Ausgabe der Masse einzusetzen.

Die Erfindung wird folgend mit einzelnen Ausführungsbeispielen mit zugehörigen Figuren exemplarisch beschrieben. Dabei zeigt
Figur 1 eine schematische, geschnittene Seitenansicht eines erfindungsgemäßen Ausgabesystems,
Figur 2 eine schematische, geschnittene Seitenansicht eines alternativen erfindungsgemäßen Ausgabesystems,
Figur 3 eine schematische, geschnittene Seitenansicht eine weiteren Variante eines erfindungsgemäßen Ausgabesystems,
Figur 4 eine schematische Draufsicht eines erfindungsgemäßen Ausgabesystems zur Ausgabe mehrerer Massen,
Figur 5 eine teilgeschnittene Seitenansicht einer weiteren Variante eines erfindungsgemäßen Ausgabesystems, welches als Schlauchbeutelpistole zum Einsatz kommt.

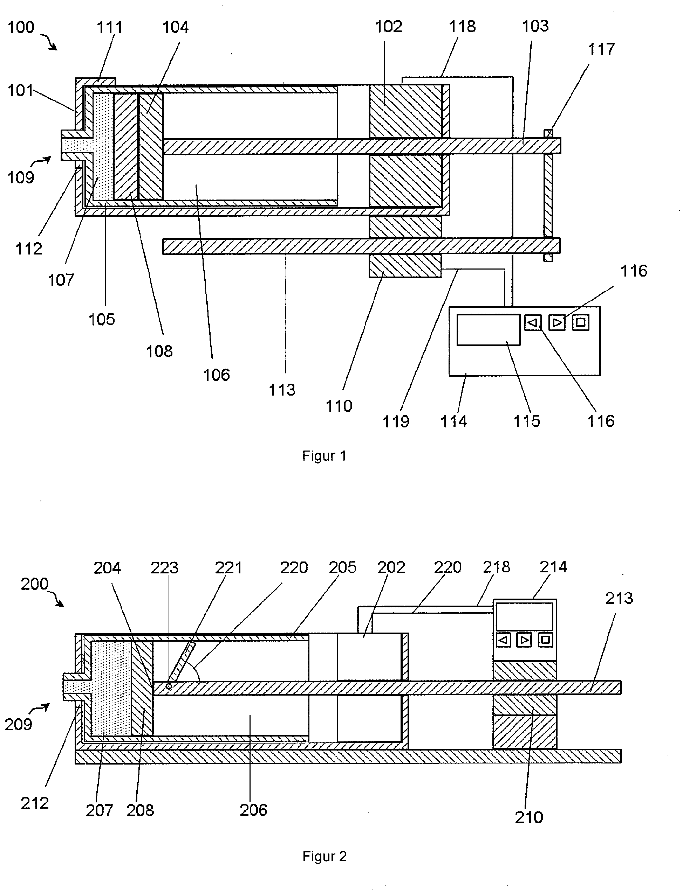

Figur 1 zeigt eine geschnittene Seitenansicht eines erfindungsgemäßen Ausgabesystems 100.Das Ausgabesystem 100 kommt als Fluidabgabesystem zur exakten Ausgabe einer Masse 107, beispielsweise eines Kleb- oder Dichtstoffes, insbesondere eines Epoxidharzes; eines Silikons; eines anaeroben, UV-aushärtenden oder Gel-Cyanacrylat-Klebstoffes, eines Chip-Bonders oder einer Lötpaste zum Einsatz. Zur Anwendung kommt das Ausgabesystem 100 bevorzugt für einen automatisierten Auftrag der Masse 107, insbesondere mit Hilfe eines Industrieroboters zum Einsatz. Andere Einsatzgebiete finden sich aber auch an Handarbeitsplätzen in Werkstätten, Labors und industriellen Einrichtungen. Die Dosierrate des gezeigten Ausgabesystems 100 liegt im Bereich von 0,02 ml/min bis 1 ml/min, besonders bevorzugt in einem Bereich von 0,04 ml/min bis 0,5 ml/min. Eine besonders bevorzugte Dosierrate liegt bei etwa 0,05 ml/min.. Die Dosiermenge je Teil im bevorzugten Bereich von 0,02g bis 0,1g, besonders bevorzugt bei 0,05g. Das Ausgabesystem 100 weist eine Aufnahmeeinheit 101 auf, welche eine die Masse 107 enthaltende im vorliegenden Ausführungsbeispiel hohlzylindrische Kartusche 105 aufnehmen kann. Dabei ist die Aufnahmeeinheit 101 im gezeigten Ausführungsbeispiel, insbesondere durch den im oberen Bereich vorstehenden Anschlag 111 derart gestaltet, dass nur Kartuschen 105 bis zu einem bestimmten Außendurchmesser aufgenommen werden können. Die Kartusche 105 umschließt mit einem festen Kunststoffmantel bereichsweise einen Hohlraum 106, in dem die Masse 107 enthalten ist. An der einen Seite wird der Hohlraum zudem von einem Kartuschenkolben 108 verschlossen, welcher dicht mit der Innenwand des besagten Mantels abschließt und welcher zu Ausgabe der Masse 107 aus einer Abgabeöffnung an der entgegengesetzten Seite der Kartusche 105 hinsichtlich der Achse der Kartusche 105 verschiebbar gestaltet ist. Die Abgabeöffnung der Kartusche 105 ragt mit einem vorstehenden Anschlussstück durch eine Ausgabeöffnung 112 an einem Abgabeende 109 des Ausgabesystems 100, dem distalen Ende der Aufnahmeeinheit 101, heraus. An jenem Anschlussstück kann beispielsweise eine nicht gezeigte Düse oder eine Schlauchverbindung mit der Kartusche 105 verbunden werden.

Zur Ausgabe der Masse 107 weist das Ausgabesystem 100 zudem eine Vortriebseinheit auf, welche ein Druckelement in Form eines Kolbens 104 aufweist, welcher zylindrisch gestaltet ist, wobei der Durchmesser des Kolbens 104 im Wesentlichen dem Innendurchmesser der Kartusche 105 entspricht. Um Masse 107 am Abgabeende 109 auszugeben, wird Kolben 104 hinsichtlich der Achse der Kartusche 105 in Richtung Abgabeende 109 verschoben und drückt den Kartuschenkolben 108 in Richtung Abgabeende 109. Hierzu beinhaltet die Vortriebseinheit ferner eine Vortriebsstange in Form einer Kolbenstange 103, welche mit dem Kolben 104 an seiner dem Abgabeende 109 gegenüberliegenden Seite fest verbunden ist sowie einen Linearmotor 102 als Vortriebseinrichtung zum Vortrieb der Kolbenstange 103 mit dem Kolben 104 in Richtung Abgabeende 109. Die Kolbenstange 103 umfasst im gezeigten Ausführungsbeispiel einen nicht abgebildeten Kraftsensor, der die durch die Kolbenstange 103 auf den Kolben 104 wirkende Kraft erfassen kann. Mit Hilfe des Kraftsensors können insbesondere Störungen, wie beispielsweise Verstopfungen, schnell erkannt werden.

Parallel zur Kolbenstange 103 ist ferner eine Messstange 113 vorgesehen, welche über ein Verbindungsjoch 117 derart mit der Kolbenstange 103 verbunden ist, dass eine Vortriebsbewegung der Kolbenstange 103 zu einer Vortriebsbewegung der Messstange113 führt. Die Messtange 113 dient der Erfassung des Vortriebsweges der Kolbenstange 103 und bildet zusammen mit einem Wegmesser 110 ein Mittel zum Bestimmen oder Erfassen besagten Vortriebsweges. Im vorliegenden Ausführungsbeispiel kommt als Wegmesser 110 ein magnetostriktives Messsystem zum Einsatz. Dergleiche Messsysteme oder Wegmesssysteme sind im Stand der Technik hinlänglich bekannt. Das Messsystem 110 hat eine bevorzugte Auflösung im Bereich von 0,001 mm bis 0,1mm, besonders bevorzugt eine Auflösung von 0,01mm. Besagtes Mittel zum Bestimmen des Vortriebsweges dient der oder hilft bei der Erfassung des Volumens der ausgegebenen Masse 107. Hierfür ist der Wegmesser 110 über eine elektrische Verbindung 119 mit einer Kontrolleinheit 114 verbunden, welche neben einem nicht gezeigten Controller oder auch Microcontroller zur Steuerung und Regelung von Vorgängen auch ein Display 115 sowie verschiedene Funktionstasten 116, insbesondere zur Steuerung des Linearmotors 102 aufweist, wobei letztgenannter mit der Kontrolleinheit 114 über eine elektrische Leitung 118 verbunden ist.

Im gezeigten Ausführungsbeispiel wird der Innendurchmesser der hohlzylindrischen Kartusche 105, also auch die Querschnittsfläche des Hohlraums 106 durch die Form der Aufnahmeeinheit 101 sowie die Gestaltung des Kolbens 104 definiert. Es können also nur Kartuschen 105 mit einem bestimmten Innendurchmesser und einer bestimmten Mantelwandstärke in die Aufnahmeeinheit 101 eingelegt werden, um eine Ausgabe der Masse 107 zu ermöglichen. Demnach bilden Kolben 104 und Aufnahmeeinheit 101 im Zusammenspiel ein Definitions- oder Sicherungsmittel, um sicherzustellen, dass nur Kartuschen 105 mit der vorgesehenen und definierten Querschnittsfläche genutzt werden. Insbesondere die Aufnahmeeinheit 101, im vorliegenden Fall zusammen mit dem Kolben 104, bilden also ein passives Mittel zum passiven Erfassen der Querschnittsfläche des Hohlraums 106, wobei wie oberhalb beschrieben die Aufnahmeeinheit 101 eine derartige Gestaltung aufweist, dass nur Kartuschen 105 mit Hohlräumen 106 mit einer bestimmten Querschnittsfläche aufnehmbar und eine Ausgabe der Masse 107 nur aus Kartuschen 105 mit Hohlräumen 106 mit einer bestimmten Querschnittsfläche möglich ist.

Alternativ zu diesem kombinierten Mittel bereitgestellt aus Kolben 104 und Aufnahmeeinheit 101 sind natürlich auch Lösungen denkbar, bei denen lediglich der Kolben 104 besagtes Mittel zum Erfassen der Querschnittsfläche des Hohlraums 106 bereitstellt, wobei selbiges vorzugsweise kolbenförmig gestaltet ist, um die Querschnittsfläche des Hohlraums 106 eines in die Aufnahmeeinheit einzulegenden Behälters zu definieren. Eine Variante dazu wäre eine Lösung, bei der ausschließlich die Aufnahmeeinheit 101 das Mittel zum Erfassen der Querschnittsfläche des Hohlraums 106 bereitstellt, wobei die Aufnahmeeinheit 101 eine derartige Gestaltung aufweist, dass nur Kartuschen 105 mit Hohlräumen 106 mit einer bestimmten Querschnittsfläche aufnehmbar und/oder eine Ausgabe der Masse 107 nur aus Kartuschen 105 mit Hohlräumen 106 mit einer bestimmten Querschnittsfläche möglich ist.

Zudem kann in einer nicht gezeigten Ausführungsform das Mittel zum Bestimmen des Volumens der ausgegebenen Masse 107 beispielsweise das abgebildete Mittel zum Bestimmen des Vortriebsweges der Kolbenstange 103 sein, wobei besagte Kontrolleinheit 114 als Mittel zum Erfassen der Querschnittsfläche des Hohlraumes 106 eine Eingabemöglichkeit der Querschnittsfläche der zur Anwendung kommenden Kartusche 105 umfasst, um Volumen der ausgegebenen Masse 105 zu errechnen.

Besagte bevorzugte und definierte Querschnittsfläche des Hohlraums 107 ist zudem im Controller der Kontrolleinheit 114 gespeichert, so dass der Controller zusammen mit dem über den Wegmesser 110 ermittelten Vortriebsweg das Volumen der ausgegebenen Masse 107 errechnen kann. Über das Display 115 kann dieses Volumen angezeigt werden. Ferner beinhaltet die Kontrolleinheit 114 eine Möglichkeit zur Einstellung von auszugebenden Massenvolumen über die Funktionstasten 116 sowie eine manuelle Steuerung der Ausgabe. Durch die Bereitstellung des Wegmessers 110 in Verbindung mit einer derartigen Gestaltung, dass nur Kartuschen 105 aufweisend Hohlräume 106 mit definierten Querschnittsflächen zum Einsatz kommen können und mittels der Kontrolleinheit 114, die Daten über den erfassten Vortriebsweg abgreift und in welcher Angaben über besagte Querschnittsfläche hinterlegt sind, kann ein Mittel zum Bestimmen und Anzeigen des Volumens der ausgegebenen Masse 107 bereitgestellt werden. In der Praxis erfolgt bevorzugt erst ein manueller Vortrieb des Kolbens 104 bis Masse 107 beispielsweise über eine angeschlossene Düse oder sonstiges nicht gezeigtes Auftragswerkzeug ausgegeben wird. Diese Anfangsausgabe erfolgt dabei vorzugsweise nicht auf das Werkstück, welches mit Masse 107 versehen werden soll. Die tatsächliche Ausgabe, deren Volumen über beschriebenes Mittel erfasst werden kann, erfolgt im Anschluss. Hierfür kann die Kontrolleinheit 114 eine Rücksetzfunktion mittels der Funktionstasten 116 beinhalten, um die Anzeige auf dem Display zurückzusetzen.

Mit dem gezeigten Ausführungsbeispiel kann somit ein echtes volumetrisches Dosieren von Massen 107 aus handelsüblichen Kartuschen 105 ermöglicht werden. Im Gegensatz zum Stand der Technik liegt hier kein nachteilbehaftetes Druck-Zeit-System vor. Zudem ist durch die besondere Gestaltung eine exakte Durchflussmessung möglich, ohne dass die für die Messung notwendigen Bauteile Kontakt zur Masse 107 haben und möglicherweise verschmutzt werden könnten. Dabei wird insbesondere auf zusätzliche, insbesondere mechanisch bewegte Teile in der Masse 107, wie etwa Spindeln oder Zahnräder wie bei handelsüblichen Durchflussmesssystemen verzichtet.

Figur 2 zeigt eine schematische, geschnittene Seitenansicht eines alternativen erfindungsgemäßen Ausgabesystems 200 aufweisend einen ähnlichen Aufbau wie das in Figur 1 gezeigte Ausgabesystem 100. Das vorliegende Ausgabesystem 200 umfasst eine Aufnahmeeinheit 201 zur Aufnahme einer hohlzylindrischen Kartusche 205 aufweisend einen mit Masse 207 gefüllten Hohlraum 206 mit einem Kartuschenkolben 208. Die Ausgabe der Masse 207 erfolgt mittels Verschiebung des Kartuschenkolbens 208 hinsichtlich der Kartuschenachse durch eine Kolbenstange 203 aufweisend ein Druckelement 204, welches durch die distale Endseite der Kolbenstange 203 bereitgestellt wird, und einen Schrittmotor 202. Zur Erfassung und Bestimmung der Querschnittsfläche des Hohlraums 206 weist die Kolbenstange 203 einen Schwenkstab 221 auf, wobei im Ruhezustand, also ohne in die Aufnahmeeinheit 201 eingelegte Kartusche 205, der Schwenkstab unter Vorspannung rechtwinklig von der Kolbenstange 203 absteht. Wir eine Kartusche 205 in die Aufnahmeeinheit 101 eingelegt und die Kolbenstange 203 in den Hohlraum 206 eingebracht, wird der Schwenkstab 221 von der Kartusche 205 gegen besagte Vorspannung um eine Achse 223 verschwenkt, bis er an der Innenwand der Kartusche 205 anliegt. Der dann vorliegende Winkel 222 zwischen verschwenktem Schwenkstab 221 und Kolbenstange 203 wird über einen nicht dargestellten digitalen Winkelmesser erfasst, wobei letzterer über eine elektrische Verbindung 220 mit einer Kontrolleinheit 214 verbunden ist. Selbige errechnet aus dem erfassten Winkel 222 die Querschnittsfläche des Hohlraums 206. Ferner ist der Schrittmotor 202 über eine elektrische Leitung 218 mit der Kontrolleinheit 214 verbunden, um selbigen steuern zu können. Die Kolbenstange 203 ist dabei an ihrer hinsichtlich des Abgabeendes 209 gegenüberliegenden Seite mit einem Messabschnitt 223 ausgestattet. Zudem ist ein Wegmesser 210 zur Erfassung des Vortriebsweges der Kolbenstange 203 über den Messabschnitt 213 vorgesehen. Auch der Wegmesser 210 ist mit der Kontrolleinheit 214 verbunden, so dass diese aus ermitteltem Vortriebsweg und aus ermitteltem Winkel 222 berechneter Querschnittsfläche des Hohlraums 206 das Volumen der ausgegeben Masse bestimmen kann. Mit dem hier dargestellten Ausgabesystem 200 lassen sich auch Kartuschen 205 mit unterschiedlichen Durchmessern und Wandstärken verwenden, da das Ausgabesystem 200 durch den Einsatz des Schwenkstabes 221 über ein aktives Mittel zum Erfassen der Querschnittsfläche des Hohlraums 207 verfügt. In der Praxis kann sich insbesondere bei der Verwendung von Kartuschen 105 mit kleineren Durchmessern der Einsatz von Abstandsmitteln als sinnvoll erweisen, die derart gestaltet sind, dass das Druckelement 204 auf den Mittelpunkt des Kartuschenkolbens 208 drückt, insbesondere um ein Verkanten des Kartuschenkolbens 208 zu vermeiden.

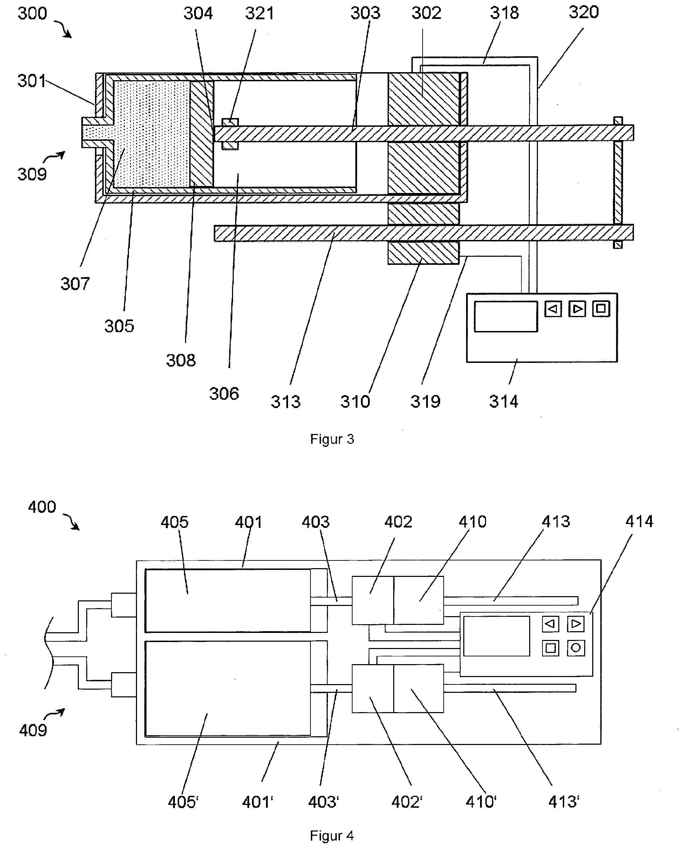

Figur 3 zeigt eine schematische, geschnittene Seitenansicht einer weiteren Variante eines erfindungsgemäßen Ausgabesystems 300 aufweisend einen ähnlichen Aufbau wie das in Figur 1 gezeigte Ausgabesystem 100. Das hier dargestellte Ausgabesystem 300 unterscheidet sich lediglich durch eine unterschiedlich gestaltete Aufnahmeeinheit 301, welche die Nutzung von unterschiedlichen Kartuschen 305 aufweisend eine Masse 307 enthaltende Hohlräume 306 mit verschiedenen Querschnittsflächen zulässt. Ähnlich wie bei dem in Figur 2 gezeigten Ausführungsbeispiel weist das hier gezeigte Ausgabesystem 300 ein aktives Mittel zum Bestimmen der Querschnittsfläche des Hohlraums 306 auf. Dies wird durch den an einer Kolbenstange 303 angeordneten Ultraschallentfernungsmesser 321 ermöglicht, welcher den Abstand zwischen Kolbenstange 303 und die den Hohlraum 306 begrenzende Innenwand der Kartusche 305 erfasst. Der Ultraschallentfernungsmesser 223 ist in unmittelbarer Nähe zu einem Druckbereich 304 der Kolbenstange 303 angeordnet, wobei der Druckbereich 304 zur Ausgabe der Masse 307 mit einem Kartuschenkolben 308 in Kontakt tritt. Selbstverständlich können hier statt des Ultraschallentfernungsmessers 321 auch andere dem Fachmann bekannte alternative Messsysteme zum Einsatz kommen. Unter Zuhilfenahme der mit dem Ultraschallentfernungsmesser 321 verbundenen Kontrolleinheit 314 kann die Querschnittsfläche des Hohlraums 306 berechnet werden. Zudem ist auch hier ein Wegmesser 310 vorgesehen, welcher den Vortriebsweg der Kolbenstange 303 erfasst und welcher ebenfalls mit der Kontrolleinheit 314 verbunden ist. Aus den so gewonnenen Daten ermöglicht die Kontrolleinheit 314 eine Anzeige des Volumens der ausgegebenen Masse 307. Die übrigen Bauelemente des Ausgabesystems 300, insbesondere Linearmotor 302, Abgabeende 309, Messtange 313 und elektrische Verbindungen 318, 319, 320 sind analog zum in Figur 1 dargestellten Ausführungsbeispiel angeordnet, so dass hier auf die diesbezügliche Beschreibung Bezug genommen wird.

Figur 4 zeigt eine schematische Draufsicht eines erfindungsgemäßen Ausgabesystems 400 zur Ausgabe mehrerer Massen, hier zur Ausgabe von zwei Komponenten eines zweikomponentigen Klebstoffes an einem Abgabeende 409. Das Ausgabesystem 400 umfasst eine Aufnahmemöglichkeit aufweisend zwei Aufnahmeeinheiten 401, 401' für zwei Behälter 405, 405', um eine gleichzeitige Ausgabe mehrerer Massen zu ermöglichen, wobei zur Ausgabe der Massen für jeden Behälter 405, 405'jeweils eine Vortriebseinrichtung 402, 402' und jeweils eine Kolbenstange 403, 403' vorgesehen ist. Selbstverständlich kann alternativ auch eine Aufnahmemöglichkeit für einen Kombinationsbehälter, wie beispielsweise eine Doppelkartusche zum Einsatz kommen. Die Ausgabe der einzelnen Massen ist dabei entkoppelt, dass heißt, dass jede Masse unabhängig von der weiteren ausgegeben werden kann und die Vortriebseinrichtungen 402, 402' unabhängig voneinander betätigbar sind. Zudem ist jeweils ein Mittel zum Bestimmen des Volumens jeder ausgegebenen Masse vorgesehen. Die Bestimmung der Querschnittsfläche der Behälter 405, 405' erfolgt dabei wie oberhalb beschrieben passiv durch spezielle Bauform von Aufnahmeeinheiten 401, 401' und ggf. nicht dargestellten Kolben oder aktiv durch den Einsatz spezieller Messvorrichtung, insbesondere dem einen in Figur 2 gezeigten Schwenkstab oder einen in Figur 3 gezeigten Ultraschallentfernungsmesser. Beide Kolbenstangen 403, 403' weisen an ihrem hinsichtlich des Abgabeende 409 gegenüberliegenden Seiten vorgesehen ersten beziehungsweise zweiten Messbereich 413, 413' auf, welche jeweils der Erfassung des Vortriebsweges der Kolbenstangen 403, 403' über einen ersten bzw. zweiten Wegmesser 410, 410' dienen. Ferner umfasst auch das hier dargestellte Ausgabesystem 400 eine Kontrolleinheit 414 zur Verarbeitung der ermittelten Daten, zur Berechnung und Anzeige der Volumen der ausgegeben Massen, zur Regelung der Vortriebseinrichtungen 402, 402' und insbesondere zur Regelung der richtigen Dosierung der beiden Komponenten. An dem Abgabeende 409 kann beispielsweise direkt ein nicht gezeigter statischer Mischer zum Vermischen der beiden Massen montiert werden. Bevorzugt werden die beiden Massen jedoch getrennt voneinander ausgegeben und über jeweils einen Produktschlauch zu einem nicht gezeigten Zweikomponentendosierer, im vorliegenden Fall ein Doppel-Schnecken-Pumpendosierer,geführt. Besagter Pumpendosierer kann dabei aus zwei Pumpen bestehen, wobei jeweils eine Pumpe für eine Masse vorgesehen ist und wobei die Pumpen derart V-förmig zueinander angeordnet sind, dass die Auslässe der Pumpen zusammenlaufen, um hier beispielsweise einen statischen Mischer anschließen zu können.

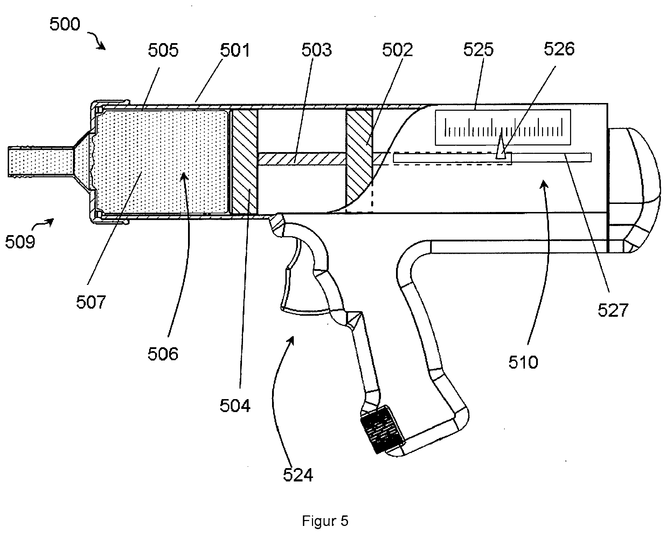

Figur 5 zeigt eine angeschnittene Seitenansicht einer weiteren Variante eines erfindungsgemäßen Ausgabesystems, welches als Schlauchbeutelpistole 500 zum Einsatz kommt. Die Grundfunktion derartiger Schlauchbeutelpistolen 500 sind im Stand der Technik hinlänglich bekannt. Die gezeigte Schlauchbeutelpistole 500 weist eine hohlzylindrische Aufnahmeeinheit 501 auf, welche an einem vorderen Abgabeende 509 eine abnehmbare Abdeckkappe mit einer Ausgabedüse aufweist. Zum Befüllen der Schlauchbeutelpistole 500 wird besagte Abdeckkappe von der Aufnahmeeinheit 501 getrennt, so dass ein Schlauchbeutel 505 in den Hohlraum der Aufnahmeeinheit 501 eingelegt werden kann. Der Schlauchbeutel 505 umschließt mit einer flexiblen Hülle aus einem Folienverbund einen Hohlraum 506 mit der auszugebenden Masse 507. Vor dem Einsatz der Schlauchbeutelpistole 500 und vor dem Aufsetzen der Abdeckkappe wird der Schlauchbeutel an der hinsichtlich des Abgabeendes 509 zugewandten Seite aufgeschnitten.

Ferner weist die Schlauchbeutelpistole 500 eine elektrische Vortriebseinrichtung 502 auf, mit welcher sich eine Kolbenstange 503 mit einem in Richtung Abgabeende 509 weisenden Kolben 504 innerhalb der Aufnahmeeinheit hinsichtlich der Längsachse der Aufnahmeeinheit 501 verschieben lässt. Zur Aktivierung der Vortriebseinrichtung 502 sind am Handgriff der Schlauchbeutelpistole 500 eine Dosiereinheit 524 sowie ein nicht abgebildeter Akku vorgesehen. Zur Ausgabe der Masse wird der Kolben 504 durch die Vortriebseinheit 502 in Richtung Abgabeende 509 gedrückt und presst die Masse 507 aus dem Schlauchbeutel 505. Durch den auf den Schlauchbeutel 505 einwirkenden Druck wird selbiger derart zusammengedrückt, dass er sich mit seiner Hülle an die Innenwand der Aufnahmeeinheit 501 schmiegt. Die Querschnittsfläche des Hohlraums 506 entspricht somit der Querschnittsfläche der Aufnahmeeinheit 501 mit einer vernachlässigbaren Differenz, die durch die Hülle des Schlauchbeutels 505 definiert wird. Am rückwärtigen Bereich der Kolbenstange 503 ist ein Wegmesser 510 vorgesehen, welcher im vorliegenden Ausführungsbeispiel mechanisch gestaltet ist. Hier ist in der Außenwand der Aufnahmeeinheit 501 ein Spalt 527 vorgesehen, durch den eine mit der Kolbenstange 503 verbundene Marke 526 hindurch ragt. Zudem ist auf der Außenfläche der Aufnahmeeinheit eine Skala 525 für die Marke 526 vorgesehen. Die Skala 525 ist dabei derart gestaltet und auf die Querschnittsfläche der Aufnahmeeinheit 501 abgestimmt, dass hier das Volumen der ausgegebenen Masse 507 angezeigt wird. Auf diese Weise kann mit der gezeigten Schlauchbeutelpistole 500 ein handbetätigbares und portables Ausgabesystem bereitgestellt werden, wobei eine volumendosierte Ausgabe gewährleistet ist.

**Bezugszeichenliste**

| | | | |
|---|---|---|---|
| 100 | Ausgabesystem | 216 | Funktionstasten |
| 101 | Aufnahmeeinheit | 218 | Elektrische Verbindung |
| 102 | Linearmotor | 219 | Elektrische Verbindung |
| 103 | Kolbenstange | 220 | Elektrische Verbindung |
| 104 | Kolben | 221 | Schwenkstab |
| 105 | Kartusche | 222 | Winkel |
| 106 | Hohlraum | 223 | Schwenkachse |
| 107 | Masse | 300 | Ausgabesystem |
| 108 | Kartuschenkolben | 301 | Aufnahmeeinheit |
| 109 | Abgabeende | 302 | Linearmotor |
| 110 | Wegmesser | 303 | Kolbenstange |
| 111 | Anschlag | 304 | Druckbereich |
| 112 | Ausgabeöffnung | 305 | Kartusche |
| 113 | Messtange | 306 | Hohlraum |
| 114 | Kontrolleinheit | 307 | Masse |
| 115 | Display | 308 | Kartuschenkolben |
| 116 | Funktionstasten | 309 | Abgabeende |
| 117 | Verbindungsjoch | 310 | Wegmesser |
| 118 | Elektrische Verbindung | 313 | Messtange |
| 119 | Elektrische Verbindung | 314 | Kontrolleinheit |
| 200 | Ausgabesystem | 318 | Elektrische Verbindung |
| 201 | Aufnahmeeinheit | 319 | Elektrische Verbindung |
| 202 | Schrittmotor | 320 | Elektrische Verbindung |
| 203 | Kolbenstange | 321 | Ultraschallentfernungsmesser |
| 204 | Druckelement | 400 | Ausgabesystem |
| 205 | Kartusche | 401 | Erste Aufnahmeeinheit |
| 206 | Hohlraum | 401' | Zweite Aufnahmeeinheit |
| 207 | Masse | 402 | Erste Vortriebseinriechung |
| 208 | Kartuschenkolben | 402' | Zweite Vortriebseinrichtung |
| 209 | Abgabeende | 403 | Erste Kolbenstange |
| 210 | Wegmesser | 403' | Zweite Kolbenstange |
| 212 | Ausgabeöffnung | 405 | Erste Kartusche |
| 213 | Messabschnitt | 405' | Zweite Kartusche |
| 214 | Kontrolleinheit | 409 | Abgabeende |
| 215 | Display | 410 | Erster Wegmesser |
| 410' | Zweiter Wegmesser | 506 | Hohlraum |
| 413 | Erster Messbereich | 507 | Dichtstoff |
| 413' | Zweiter Messbereich | 509 | Ausgabedüse |
| 414 | Kontrolleinheit | 510 | Wegmesser |
| 500 | Schlauchbeutelpistole | 524 | Dosiereinheit |
| 501 | Aufnahmeeinheit | 525 | Skala |
| 502 | Vortriebseinrichtung | 526 | Marke |
| 503 | Kolbenstange | 527 | Spalt |
| 504 | Kolben | | |
| 505 | Schlauchbeutel | | |

## Patentansprüche

1. Ausgabesystem (100, 200, 300, 400, 500) zum Ausgeben von flüssigen bis pastösen mehrkomponentiger Massen (107, 207, 307, 507) aus Hohlräumen (106, 206, 306, 506) von wenigstens zwei Behältern (105, 205, 305, 405, 405', 505) enthaltend die Komponenten, aufweisend
- ein Abgabeende (109, 209, 309, 409, 509), an dem die Komponenten (107, 207, 307, 507) ausgegeben werden,
- eine Aufnahmeeinheit (101, 201, 301, 401, 401', 501) für wenigstens zwei Behälter (105, 205, 305, 405, 405', 505) aufweisend die mit den auszugebenden Komponenten (107, 207, 307, 507) gefüllten Hohlräume (106, 206, 306, 506),
- für jeden Behälter jeweils eine Vortriebsstange (103, 203, 303, 403, 403', 503) mit einem an der dem Abgabeende (109, 209, 309, 409, 509) zugewandten Seite der Vortriebsstange (103, 203, 303, 403, 403', 503) vorgesehenen Druckelement (104, 204, 304, 504),
- für jeden Behälter jeweils eine Vortriebseinrichtung (102, 202, 302. 402, 402') zum Vortrieb der Vortriebsstange (103, 203, 303, 403, 403', 503) mit dem Druckelement (104, 204, 304, 504) in Richtung Abgabeende (109, 209, 309, 409, 509),
- für jeden Behälter jeweils ein Mittel zum Bestimmen des Volumens der jeweils ausgegebenen Masse (107, 207, 307, 507) sowie
- ein statischer Mischer zum Vermischen der beiden Komponenten und **dadurch gekennzeichnet, dass** die Vortriebseinrichtungen (102, 202, 302. 402, 402') zur entkoppelten Ausgabe der einzelnen Komponenten unabhängig voneinander betätigbar sind.

2. Ausgabesystem nach Anspruch 1, **dadurch gekennzeichnet, dass** der statische Mischer zum Vermischen der beiden Massen direkt an dem Abgabeende (409) vorgesehen ist.

3. Ausgabesystem nach Anspruch 1, **dadurch gekennzeichnet, dass** die Massen getrennt voneinander ausgegeben werden und über jeweils einen Produktschlauch zu einem Mehrkomponentendosierer, geführt werden, an dem der statische Mischer zum Vermischen der beiden Massen vorgesehen ist.

4. Ausgabesystem (100, 200, 300, 400, 500) nach einem der vorhergehenden Ansprüche, **dadurch gekennzeichnet, dass** das Mittel zum Bestimmen des Volumens der ausgegebenen Masse (107, 207, 307, 507) ein erstes Mittel (101; 111, 104, 221, 321, 501) zum Bestimmen der Querschnittsfläche des die Masse (107, 207, 307, 507) enthaltenen Hohlraumes (106, 206, 306, 506) sowie ein zweites Mittel (110, 210, 310, 410, 510) zum Bestimmen des Vortriebsweges der Vortriebsstange (103, 203, 303, 403, 403', 503), um eine Erfassung des Volumens der ausgegebenen Masse (107, 207, 307, 507) zu ermöglichen.

5. Ausgabesystem (100, 200, 300, 400, 500) nach einem der vorhergehenden Ansprüche, **dadurch gekennzeichnet, dass** das Druckelement (104, 204, 304, 504) der Vortriebsstange (103, 203, 303, 403, 403', 503) das erste Mittel zum Erfassen der Querschnittsfläche des Hohlraums (106, 206, 306, 05.03.2018 506) bereitstellt, wobei das Druckelement kolbenförmig (104, 204, 304, 504) gestaltet ist, um die Querschnittsfläche des Hohlraums (106, 206, 306, 506) eines in die Aufnahmeeinheit (101, 201, 301, 401, 401', 501) einzulegenden Behälters (105, 205, 305, 405, 405', 505) zu definieren.

6. Ausgabesystem (100, 200, 300, 400, 500) nach einem der Ansprüche 1 bis 4, dadurch dass die Aufnahmeeinheit (101, 201, 301, 401, 401', 501) das erste Mittel zum Erfassen der Querschnittsfläche des Hohlraums (106, 206, 306, 506) bereitstellt, wobei die Aufnahmeeinheit (101, 201, 301, 401, 401', 501) eine derartige Gestaltung aufweist, dass nur Behälter (105, 205, 305, 405, 405', 505) mit Hohlräumen (106, 206, 306, 506) mit einer bestimmten Querschnittsfläche aufnehmbar und/oder eine Ausgabe der Masse (107, 207, 307, 507) nur aus Behältern (105, 205, 305, 405, 405', 505) mit Hohlräumen (106, 206, 306, 506) mit einer bestimmten Querschnittsfläche möglich ist.

7. Ausgabesystem (100, 200, 300, 400, 500) nach einem der vorhergehenden Ansprüche, **dadurch gekennzeichnet, dass** das zweite Mittel (110, 210, 310, 410, 510) zum Bestimmen des Vortriebsweges der Vortriebsstange (103, 203, 303, 403, 403', 503) ein Wegmesssystem (110, 210, 310, 410, 410', 510) umfasst, um den Vortriebsweg der Vortriebsstange (103, 203, 303, 403, 403', 503) zu bestimmen.

8. Ausgabesystem (100, 200, 300, 400, 500) nach einem der vorhergehenden Ansprüche, **dadurch gekennzeichnet, dass** das zweite Mittel (110, 210, 310, 410, 510) zum Bestimmen des Vortriebsweges der Vortriebsstange (103, 203, 303, 403, 403', 503) eine Messstange (113, 213, 313, 413, 413') umfasst und ein Vortrieb der Vortriebsstange (103, 203, 303, 403, 403', 503) zu einer Bewegung der Messstange (113, 213, 313, 413, 413') führt.

9. Ausgabesystem (100, 300) nach Anspruch 8, **dadurch gekennzeichnet, dass** die Messtange (113, 313) parallel zur Vortriebsstange (103, 303) angeordnet ist und über ein jochförmiges Verbindungselement (117) mit der Vortriebsstange (103, 303,) verbunden ist, um eine Bewegung der Messstange (113, 313) bei einem Vortrieb der Vortriebsstange (103, 303) zu gewährleisten.

10. Ausgabesystem (100, 200, 300, 400, 500) nach einem der vorhergehenden Ansprüche, **dadurch gekennzeichnet, dass** das Mittel zum Bestimmen des Volumens der ausgegebenen Masse (107, 207, 307, 507) das Mittel zum Bestimmen des Vortriebsweges der Vortriebsstange (103, 203, 303, 403, 403', 503) aufweisend ein Messsystem (110, 210, 310, 410, 410', 510) zum Bestimmen des Vortriebsweges umfasst sowie eine Kontrolleinheit (114, 214, 314, 414) mit der das Messsystem (110, 210, 310, 410, 410', 510) verbunden ist, wobei die Kontrolleinheit (114, 214, 314, 414) oder das Messsystem (110, 210, 310, 410, 510) eine Eingabemöglichkeit der Querschnittsfläche des Hohlraums (106, 206, 306, 506) des verwendeten Behälters (105, 205, 305, 405, 405', 505) umfasst, um das Volumen der ausgegebenen Masse (107, 207, 307, 507) zu berechnen.

11. Ausgabesystem (100, 200, 300, 400) nach einem der vorhergehenden Ansprüche, **dadurch gekennzeichnet, dass** ein Dosiersystem für die auszugebenden Massen (107, 207, 307) an dem 05.03.2018
Abgabeende (109, 209, 309, 409,) des Ausgabesystems (100, 200, 300, 400) vorgesehen oder als zusätzliche Einheit an das Abgabeende (109, 209, 309, 409,) angeschlossen ist

12. Ausgabesystem (100, 200, 300, 400, 500) nach einem der vorhergehenden Ansprüche, **dadurch gekennzeichnet, dass** ein Mittel zum Erfassen der über die Vortriebsstange (103, 203, 303, 403, 403', 503) auf das Druckelement (104, 204, 304, 504) wirkenden Kraft zur Ausgabe der Masse (107, 207, 307, 507) vorgesehen ist.

## Claims

1. A dispensing system (100, 200, 300, 400, 500) for dispensing liquid to pasty multi-component compounds (107, 207, 307, 507) from cavities (106, 206, 306, 506) in at least two containers (105, 205, 305, 405, 405', 505) containing the components, which system comprises
- a discharge end (109, 209, 309, 409, 509) at which the components (107, 207, 307, 507) are dispensed,
- a receiving unit (101, 201, 301, 401, 401', 501) for at least two containers (105, 205, 305, 405, 405', 505) comprising the cavities (106, 206, 306, 506) filled with the components (107, 207, 307, 507) to be dispensed,
- for each container, a propulsion rod (103, 203, 303, 403, 403', 503) having a pushing element (104, 204, 304, 504) provided on the side of the propulsion rod (103, 203, 303, 403, 403', 503) that faces the discharge end (109, 209, 309, 409, 509),
- for each container, a propulsion device (102, 202, 302, 402, 402') for propelling the propulsion rod (103, 203, 303, 403, 403', 503) towards the discharge end (109, 209, 309, 409, 509) by means of the pushing element (104, 204, 304, 504),
- for each container, a means for determining the volume of the particular dispensed compound (107, 207, 307, 507) and
- a static mixer for mixing the two components, **characterized in that** the propulsion devices (102, 202, 302, 402, 402') can be operated independently of one another in order to dispense the individual components in a decoupled manner.

2. The dispensing system according to claim 1, **characterized in that** the static mixer for mixing the two compounds is provided directly at the discharge end (409).

3. The dispensing system according to claim 1, **characterized in that** the compounds are dispensed separately from one another and are each guided via a product tube to a multi-component metering means, on which the static mixer for mixing the two compounds is provided.

4. The dispensing system (100, 200, 300, 400, 500) according to one of the preceding claims, **characterized in that** the means for determining the volume of the dispensed compound (107, 207, 307, 507) comprises a first means (101; 111, 104, 221, 321, 501) for determining the cross-sectional area of the cavity (106, 206, 306, 506) containing the compound (107, 207, 307, 507) and a second means (110, 210, 310, 410, 510) for determining the propulsion path of the propulsion rod (103, 203, 303, 403, 403', 503) in order for it to be possible to detect the volume of the dispensed compound (107, 207, 307, 507).

5. The dispensing system (100, 200, 300, 400, 500) according to one of the preceding claims, **characterized in that** the pushing element (104, 204, 304, 504) of the propulsion rod (103, 203, 303, 403, 403', 503) provides the first means for detecting the cross-sectional area of the cavity (106, 206, 306, 506), the pushing element being in the form of a piston (104, 204, 304, 504) in order to define the cross-sectional area of the cavity (106, 206, 306, 506) of a container (105, 205, 305, 405, 405', 505) to be inserted into the receiving unit (101, 201, 301, 401, 401', 501).

6. The dispensing system (100, 200, 300, 400, 500) according to one of claims 1 to 4, **characterized in that** the receiving unit (101, 201, 301, 401, 401', 501) provides the first means for detecting the cross-sectional area of the cavity (106, 206, 306, 506), the receiving unit (101, 201, 301, 401, 401', 501) being designed such that only containers (105, 205, 305, 405, 405', 505) having cavities (106, 206, 306, 506) of a certain cross-sectional area can be received and/or such that it is only possible to dispense the compound (107, 207, 307, 507) from containers (105, 205, 305, 405, 405', 505) having cavities (106, 206, 306, 506) of a certain cross-sectional area.

7. The dispensing system (100, 200, 300, 400, 500) according to one of the preceding claims, **characterized in that** the second means (110, 210, 310, 410, 510) for determining the propulsion path of the propulsion rod (103, 203, 308, 403, 403', 503) comprises a path measuring system (110, 210, 310, 410, 410', 510) in order to determine the propulsion path of the propulsion rod (103, 203, 303, 403, 403', 503).

8. The dispensing system (100, 200, 300, 400, 500) according to one of the preceding claims, **characterized in that** the second means (110, 210, 310, 410, 510) for determining the propulsion path of the propulsion rod (103, 203, 303, 403, 403', 503) comprises a measuring rod (113, 213, 313, 413, 413') and propulsion of the propulsion rod (103, 203, 303, 403, 403', 503) leads to movement of the measuring rod (113, 213, 313, 413, 413').

9. The dispensing system (100, 300) according to claim 8, **characterized in that** the measuring rod (113, 313) is arranged in parallel with the propulsion rod (103, 303) and is connected to the propulsion rod (103, 303) by means of a yoke-shaped connecting element (117) in order to ensure movement of the measuring rod (113, 313) during propulsion of the propulsion rod (103, 303).

10. The dispensing system (100, 200, 300, 400, 500) according to one of the preceding claims, **characterized in that** the means for determining the volume of the dispensed compound (107, 207, 307, 507) comprises the means intended for determining the propulsion path of the propulsion rod (103, 203, 303, 403, 403', 503) and comprising a measuring system (110, 210, 310, 410, 410', 510) for determining the propulsion path, and comprises a control unit (114, 214, 314, 414) to which the measuring system (110, 210, 310, 410, 410', 510) is connected, the control unit (114, 214, 314, 414) or the measuring system (110, 210, 310, 410, 510) having the option of inputting the cross-sectional area of the cavity (106, 206, 306, 506) of the used container (105, 205, 305, 405, 405', 505) in order to calculate the volume of the dispensed compound (107, 207, 307, 507).

11. The dispensing system (100, 200, 300, 400) according to one of the preceding claims, **characterized in that** a metering system for the compounds (107, 207, 307) to be dispensed is provided at the discharge end (109, 209, 309, 409) of the dispensing system (100, 200, 300, 400) or is connected to the discharge end (109, 209, 309, 409) as an additional unit.

12. The dispensing system (100, 200, 300, 400, 500) according to one of the preceding claims, **characterized in that** a means for detecting the force for dispensing the compound (107, 207, 307, 507) exerted on the pushing element (104, 204, 304, 504) by means of the propulsion rod (103, 203, 303, 403, 403', 503) is provided.

## Revendications

1. Système de sortie (100, 200, 300, 400, 500) pour l'évacuation de masses
multicomposant liquides à pâteuses (107, 207, 307, 507) provenant de cavités (106, 206, 306, 506) d'au moins deux récipients (105, 205, 305, 405, 405', 505) contenant les composants, présentant une extrémité de décharge (109, 209, 309, 409, 509) par laquelle les composants (107, 207, 307, 507) sont évacués,
une unité de capture (101, 201, 301, 401, 401', 501) pour au moins deux récipients (105, 205,
305, 405, 405', 505) présentant des cavités (106, 206, 306, 506) remplies de composants à évacuer (107, 207, 307,
507),
pour chaque récipient, une tige de propulsion respective (103, 203, 303, 403, 403', 503) avec un élément de pression (104, 204, 304, 504) prévu sur un côté de la tige de propulsion (103, 203, 303, 403, 403', 503) orienté vers l'extrémité de décharge (109, 209, 309, 409, 509),
pour chaque récipient, un dispositif de propulsion respectif (102, 202, 302, 402, 402') pour la propulsion de la tige à propulsion (103, 203, 303, 403, 403', 503) avec l'élément de pression (104, 204, 304, 504) dans la direction de l'extrémité de décharge (109, 209, 309, 409, 509),
pour chaque récipient, un moyen respectif de détermination du volume de la masse respective évacuée (107, 207, 307, 507), ainsi
qu'un mixeur statique pour mélanger les deux composants et **caractérisé en ce que** les dispositifs de propulsion (102, 202, 302. 402, 402') sont actionnés indépendamment les uns des autres en vue de la sortie découplée de chaque composant.

2. Système de sortie selon la revendication 1, **caractérisé en ce que** le mixeur statique destiné au mélange des deux masses est prévu directement sur l'extrémité de décharge (409).

3. Système de sortie selon la revendication 1, **caractérisé en ce que** les masses sont évacuées, séparément les unes des autres, et sont conduites par le biais d'un tuyau d'alimentation respectif vers un doseur multicomposant sur lequel est prévu le mixeur statique destiné au mélange des deux masses.

4. Système de sortie (100, 200, 300, 400, 500) selon l'une des revendications précédentes, **caractérisé en ce que** le moyen de détermination du volume de la masse évacuée (107, 207, 307, 507) fournit un premier moyen (101 ; 111, 104, 221, 321, 501) de détermination de la section transversale de la cavité (106, 206, 306, 506) contenue dans la masse, ainsi qu'un second moyen (110, 210, 310, 410, 510) de détermination du canal de distribution de la tige de propulsion (103, 203, 303, 403, 403', 503), afin de permettre une détection du volume de la masse évacuée (107, 207, 307, 507).

5. Système de sortie (100, 200, 300, 400, 500) selon l'une des revendications précédentes, **caractérisé en ce que** l'élément de pression (104, 204, 304, 504) de la tige de propulsion (103, 203, 303,
403, 403', 503) fournit le premier moyen de détection de la section transversale de la cavité (106, 206, 306, 506), où l'élément de pression est agencé sous forme cylindrique (104, 204, 304, 504), afin de définir la section transversale de la cavité (106, 206, 306, 506) d'un récipient (105, 205, 305, 405, 405', 505) à insérer dans l'unité de capture (101, 201, 301, 401, 401', 501).

6. Système de sortie (100, 200, 300, 400, 500) selon l'une des revendications 1 à 4, **caractérisé en ce que** l'unité de capture (101, 201, 301, 401, 401', 501) fournit le premier moyen de détection de la section transversale de la cavité (106, 206, 306, 506), où l'unité de capture (101, 201, 301, 401, 401', 501) présente un agencement tel que seul le récipient (105, 205, 305, 405, 405', 505) avec cavités (106, 206, 306, 506) est enregistrable avec la section transversale déterminée et/ou **en ce qu'**une évacuation de la masse (107, 207, 307, 507) est possible avec la section transversale déterminée uniquement à partir des récipients (105, 205, 305, 405, 405', 505) avec cavités (106, 206, 306, 506).

7. Système de sortie (100, 200, 300, 400, 500) selon l'une des revendications précédentes, **caractérisé en ce que** le second moyen (110, 210, 310, 410, 510) de détermination du canal de distribution de la tige de propulsion (103, 203, 303, 403, 403', 503) inclut un capteur de position (110, 210, 310, 410, 410',
510), afin de déterminer le canal de distribution de la tige de propulsion (103, 203, 303, 403, 403', 503).

8. Système de sortie (100, 200, 300, 400, 500) selon l'une des revendications précédentes, **caractérisé en ce que** le second moyen (110, 210, 310, 410, 510) de détermination du canal de distribution de la tige de propulsion (103, 203, 303, 403, 403', 503) inclut une tige de mesure (113, 213, 313, 413, 413') et **en ce qu'**une propulsion de la tige de propulsion (103, 203, 303, 403, 403', 503) provoque un mouvement de la tige de mesure (113, 213, 313, 413, 413').

9. Système de sortie (100, 300) selon la revendication 8, **caractérisé en ce que** la tige de mesure (113, 313) est disposée parallèlement à la tige de propulsion (103, 303) et est liée à la tige de propulsion (103, 303) par le biais d'un élément de liaison (117) en forme de joug, afin de garantir un mouvement de la tige de mesure (113, 313) lors d'une propulsion de la tige de propulsion (103, 303).

10. Système de sortie (100, 200, 300, 400, 500) selon l'une des revendications précédentes, **caractérisé en ce que** le moyen de détermination du volume de la masse évacuée (107, 207, 307, 507) inclut le moyen de détermination du canal de distribution de la tige de propulsion (103, 203, 303, 403,
403', 503) présentant un système de mesure (110, 210, 310, 410, 410', 510) destiné à la détermination du canal de distribution, ainsi qu'en ce qu'une unité de contrôle (114, 214, 314, 414) est liée avec celle du système de mesure (110, 210, 310, 410, 410', 510), où l'unité de contrôle (114, 214, 314, 414) ou le système de mesure (110, 210, 310, 410, 510) comprend une entrée possible de la section transversale de la cavité (106, 206, 306, 506) du récipient (105, 205, 305, 405, 405', 505) utilisé, afin de calculer le volume de la masse évacuée (107, 207, 307, 507).

11. Système de sortie (100, 200, 300, 400) selon l'une des revendications précédentes, **caractérisé en ce qu'**un système de dosage est prévu pour les masses à évacuer (107, 207, 307) sur l'extrémité de décharge (109, 209, 309, 409) du système de sortie (100, 200, 300, 400) ou est connecté à l'extrémité de décharge (109, 209, 309, 409) en tant qu'unité supplémentaire.

12. Système de sortie (100, 200, 300, 400, 500) selon l'une des revendications précédentes, **caractérisé en ce qu'**un moyen de détection de la force agissant sur l'élément de pression (104, 204, 304, 504) par le biais de la tige de propulsion (103, 203, 303, 403, 403', 503) est prévu pour l'évacuation de la masse (107, 207, 307, 507).
